# EUROPEAN PATENT SPECIFICATION

(11) **EP 0 920 652 B1**
(45) Date of publication and mention of the grant of the patent: **10.12.2003**
(21) Application number: 97922569.5
(22) Date of filing: 01.05.1997
(51) Int. Cl.: G03B 15/08, G03B 27/475, G03B 21/48, G03B 21/32

(54) **METHOD FOR IMPARTING BOTH HIGH-IMPACT CINEMATIC IMAGES AND CONVENTIONAL CINEMATIC IMAGES ON THE SAME STRIP OF MOTION PICTURE FILM**
VERFAHREN ZUR ÜBERLAGERUNG VON KINEMATOGRAPHISCHEN BILDERN MIT HOHEM REALITÄTSEFFEKT UND HERKÖMMLICHEN KINEMATOGRAPHISCHEN BILDERN AUF DEM SELBEN STREIFEN KINEMATOGRAPHISCHEN FILMS
PROCEDE SERVANT A IMPRIMER SUR LA MEME BANDE D'UN FILM CINEMATOGRAPHIQUE DES IMAGES ANIMEES PRODUISANT UNE FORTE IMPRESSION ET DES IMAGES ANIMEES CLASSIQUES

(30) Priority: 23.08.1996 US 702063
(43) Date of publication of application: 09.06.1999
(73) Proprietor: Weisgerber, Robert C., New York, NY 10128 (US)
(72) Inventor: Weisgerber, Robert C., New York, NY 10128 (US)
(74) Representative: Giles, Ashley Simon
(86) International application number: PCT/US97/07266
(87) International publication number: WO 98/008140

(56) References cited:
- WO-A-93/06520
- WO-A-96/18265
- US-A- 4 157 570
- US-A- 5 096 286
- US-A- 5 627 614

## Description

### FIELD OF THE INVENTION

This invention relates to a method of producing a motion picture, to the produced motion picture and to a method of displaying the motion picture to theatrical motion picture audiences.

### BACKGROUND OF THE INVENTION

Throughout its history, the motion picture industry has developed new technologies to make motion pictures appear more realistic to audiences than had previously been possible. The advent of sound, color and 70mm film in the late 1920s added a dimension of realism, when compared to earlier films. The same can be said of developments from the 1950s, such as Cinemascope (wide screen image achieved through anamorphic compression and expansion), Todd-AO (70mm film photographed at 30 frames per second with six-channel audio) and Cinerama (three synchronized projectors operating at twenty-six frames per second, projecting films photographed at that frame rate onto a deeply curved screen). While each of these systems increased the sensory impact received by audience members, none of these systems were compatible with each other or with conventional motion picture exhibition systems then in use.

The same is true of the current high-impact systems, IMAX (15-perforation 70mm film traveling in the horizontal direction) or SHOWSCAN (conventional five-perforation 70mm at sixty frames per second). The large film frame of IMAX and the high speed of SHOWSCAN limit their use to a few special venues. Conversion of films recorded in these formats cannot be accomplished for use in conventional motion picture theaters without loss of the audience impact gained through the use of the special format, since such conversion requires the use of the frame rate of 24 frames per second. At that speed, the presence of such artifacts as grain, flicker and a lack of smoothness in the interpolation of motion serve to remind the audience viewing the motion picture that it is, indeed, a motion picture. The "cinematic" look associated with projection at twenty-four or twenty-five frames per second appears palpably different to a viewer than films photographed at double these frame rates, where the artifacts mentioned above are reduced to imperceptible levels.

In an attempt to convert films photographed at sixty frames per second to the "conventional" rate of twenty-four frames per second, Trumbull (U.S. Pat. No. 4,889,423 (1989)) discloses a method for superimposing the first two images of each group of five shot at sixty frames per second into a single 24 fps frame, varying the amount of exposure of the the two images as superimposed. The next 24 fps frame is likewise made up of the superimposed images of the fourth and fifth frames of the group of images photographed at 60 fps. Trumbull's conversion method does not work in practice, since the superimposition of images on each 24 fps frame causes objectionable strobing and blurring of the images as seen by the viewer. Moreover, the omission of the third frame of each group of five frames shot at 60 fps interrupts the smooth interpolation of motion available at the higher speed, thereby causing another objectionable artifact.

The invention disclosed here allows the presentation of motion picture films that deliver a more realistic image to the viewers of such films, in conventional motion picture theater venues, than is currently available to such viewers. It is a primary objective of this invention to allow the combining of parts of a motion picture image that will cause the audience to perceive portions of the images they see as imparting a strong illusion of reality to the viewer and other portions of the images as having the conventional "cinematic" look associated with the frame rates of twenty-four or twenty-five frames per second. The invention disclosed here allows the audience to perceive certain portions of the images they see as more realistic than other portions of such images, thereby adding a dimensionality to the film as viewed. It is a further objective of this invention to provide a means for delivering a high-impact presentation to motion picture audiences and withdrawing the high-impact feature when it is not needed or desired. It is also an objective of the invention to allow easy conversion from the format described into a conventional format for general release and distribution to exhibitors not equipped to show films made in the format described here, without causing objectionable artifacts as a result of the conversion process.

The difference between the "cinematic" look delivered at twenty-four frames per second (and, by implication at twenty-five frames per second, since that rate is only four per cent faster) and the look delivered at significantly higher frame rates was noted by Trumbull in U.S. Pat. No. 4,477,160 (1984) at col. 5, lines 44 to 58 (patent for SHOWSCAN system). Trumbull goes on to state that the impact to which he refers is not available with the IMAX format because of its use of the twenty-four frames per second frame rate (at col. 5, line 64 to col. 6, line 10).

The rate of thirty frames per second has been used to create a more highly realistic effect than that available at twenty-four or twenty-five frames per second. Two films, Around the World in Eighty Days and Oklahoma, were commercially released in the Todd/AO format for projection at thirty frames per second. Despite the enhanced realism objained, this frame rate was abandoned because of its incompatibility with conventional exhibition at twenty-four frames per second, thereby preventing wide distribution for films photographed at thirty frames per second. For general release and exhibition, it was necessary to have a second camera record the same scenes at twenty-four frames per second that the first camera recorded simultaneously at thirty frames per second. More recently, the inventor herein has disclosed a method for transitioning between two different frame rates; specifically twenty-four and thirty frames per second (Weisgerber, U.S. Pat. No. 5,096,286 (1992)). This transitioning method uses selective underexposure of certain film frames to give the audience the impression of flicker and other artifacts present at the twenty-four frames per second rate until the film speed had completed acceleration to thirty frames per second. At that time, a brighter light was switched on to increase the brightness of the image as seen by the audience. The process was reversed for the slowdown from thirty to twenty-four frames per second.

Noteworthy in the earlier Weisgerber invention is the means for modulating between high-impact (at 30 fps) and "conventional" film experience (at 24 fps). High-impact systems currently in use (such as IMAX and SHOWSCAN) are always "on" and cannot be withdrawn. Such continuous high-impact presentation, even when it not needed to advance the story line of the picture, can overload the viewers with visual input; thereby creating another unwanted artifact.

It is the "cinematic look" of films photographed and shown at twenty-four or twenty-five frames per second that is central to the present invention. The differences noted by Trumbull (160) between 24-fps presentation and higher speed presentation are precisely the differences in level of the illusion of reality which viewers perceive and that the present invention seeks to modulate. Thus, scenes (or even specific shots) within a single motion picture can have either the conventional cinematic look or the high-impact effect, at the discretion of the director of the picture. In another application, images delivering the high-impact effect can be composited onto the same film frame as images delivering the conventional cinematic look. With the method described here, selected components of a film image can appear more realistic to the audience than other image components that the viewers observe simultaneously. As films prepared according to the present invention are shown, audiences will perceive that certain components of the action in the motion picture appear more realistic than other components of the action; thereby approximating the real-life experience where some events have a greater impact on a viewer's perception than other.

A further example of conventional picture transfer process and device is disclosed in WO-A-96/18 265.

### BRIEF DESCRIPTION OF THE INVENTION

According to the present invention there is provided a method of producing motion picture films for theatrical audiences as defined in claim 1.

This invention concerns also a motion picture film as defined in claim 10 produced by employing a method in accordance with the present invention.

The invention concerns also a method of exhibiting the motion picture film as defined in claim 12.

Certain portions of such images appear to the audience viewing the film as delivering conventional cinematic experience, while other portions of such composite images appear to give the audience the illusion of realism as delivered by high speed projection, as used in SHOWSCAN (Trumbull 160).

In the preferred embodiment of the invention, film sequences or portions of images are photographed at a "conventional" frame rate of twenty-four or twenty-five frames per second, while the "high-impact" film sequences or portions of images are photographed at a rate double the rate at which the "conventional" film sequences or portions of images are photographed; forty-eight or fifty frames per second.

Scenes or portions of images for which a conventional "cinematic" look is desired are photographed at twenty-four or twenty-five frames per second in the conventional manner. Scenes or portions of images for which a high-impact presentation is desired at photographed (or animated and copied through an optical printer or using computer compositing techniques) at forty-eight or fifty frames per second. All scenes are projected at the higher of the two frame rates used, forty-eight or fifty frames per second, whether or not high-impact presentation is desired for any particular scene. Sequences photographed at twenty-four or twenty-five frames per second are double-frame printed for projection at forty-eight frames per second (for images photographed at twenty-four frames per second) or fifty frames per second (for images photographed at twenty-five frames per second).

Conventional Geneva projectors can be used for this application, but the projector must be modified to advance the film twice as often as in conventional operation. This can be accomplished by means known in the art. The projector motor can be modified to operate at double the conventional speed, so the film is advanced forty-eight or fifty times each second, rather than the conventional twenty-four or twenty-five. Alternatively, a double-pin cam can be used to advance the star wheel twice as often, resulting in film pulldown occurring twice as often than with conventional operation. Projectors featuring high-speed pulldown and stationary pins for highly accurate registration, such as the "Linear Loop" projector manufactured by the Pioneer Technology Corp. of Burbank, California, U.S.A., are also suitable for showing films according to this invention. Whatever type of projector is used for the practice of this invention, it is preferable for the projector be equipped with a double bladed shutter so that two flashes of light will be presented for each film frame.

On projection, all films are projected at either forty-eight or fifty frames per second with a double bladed shutter, so viewers are presented with ninety-six or one hundred image impressions per second. For portions of images where the "cinematic" look associated with photography at twenty-four or twenty-five frames per second is desired, each image component is printed onto two successive frames of film for projection. The perception for the viewer would be the same as for conventional cinematic images projected at twenty-four or twenty-five frames per second. Strobing, motion blur and other artifacts associated with photography at twenty-four or twenty-five frames per second would be retained, since only twenty-four or twenty-five fresh images would be presented to the viewers during each second.

Portions of a motion picture feature film are photographed at twenty-four or twenty-five frames per second and projected to maintain the appearance of a film photographed and projected at that speed, while other portions of the film are photographed and projected at forty-eight or fifty frames per second to deliver a more realistic look with a dimensionality that is not present at frame rates of twenty-four or twenty-five frames per second. By employing a method in accordance with the present invention, not only is this modulation of the intensity of the experience. perceived by the viewers available between scenes of a motion picture, but in addition image components photographed (or animated) at both twenty-four or twenty-five frames per second and forty-eight or fifty frames per second can be composited together during a sequence. The audience would then perceive both high-impact, visually-dominating action and other action that retains a cinematic appearance.

### BRIEF DESCRIPTION OF THE DRAWINGS

The first three drawing figures represent motion picture film strips containing picture information. The portions of the film strips containing nonpicture information, such as audio information and time codes, are not depicted.

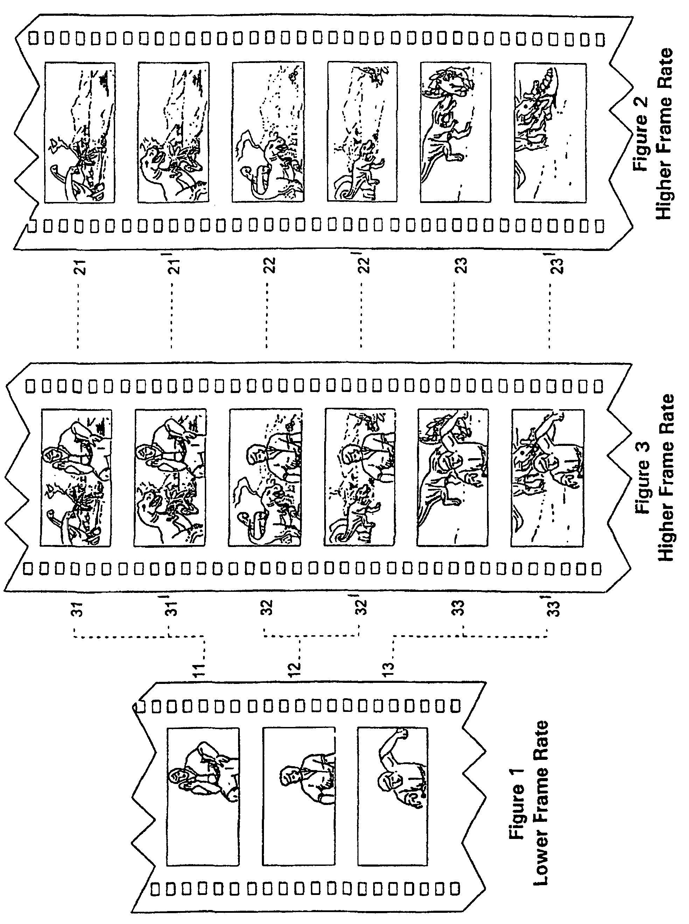

Fig. 1 shows a strip of film photographed at twenty-four or twenty-five frames per second, depicting a blank background and a man in the foreground.

Fig. 2 shows a strip of film containing twice as many images as on the film in Fig. 1 and photographed at double the rate at which the images on the film strip in Fig. 1 were photographed, such images being animated dinosaurs.

Fig. 3 shows a strip of film printed for projection at forty-eight or fifty frames per second, showing a composite of the images contained on the film strips depicted at Figs. 1 and 2, with each image from Fig. 1 composited with two successive images from Fig. 2, with the resulting composite images showing the man depicted in Fig. 1 appearing to interact with the dinosaurs depicted in Fig. 2.

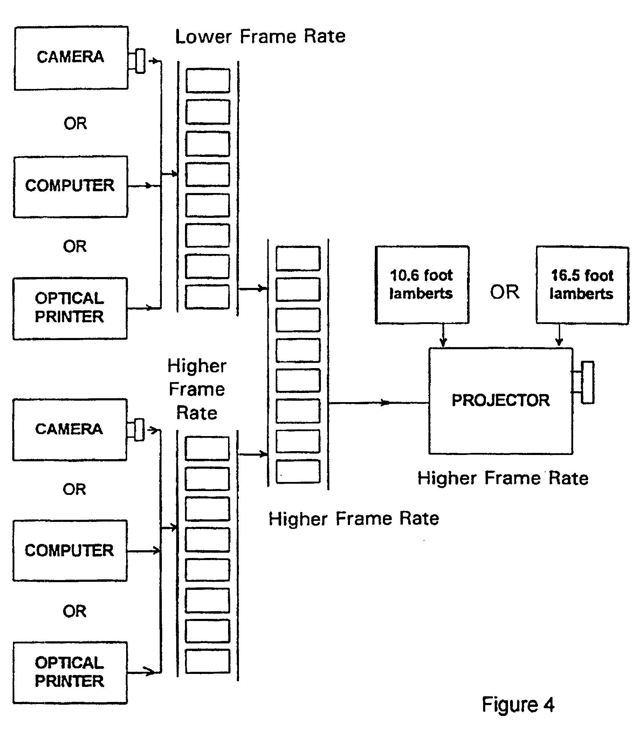

Fig. 4 shows a block diagram of the system used in the preferred emobidment of the invention. Film images from a camera, optical printer or computer are recorded onto separate film strips at twenty-four or twenty-five frames per second and forty-eight or fifty frames per second, these image components are composited onto another film strip, and this film strip is projected at a rate of forty-eight or fifty frames per second (the rate at which the greater number of image components were photographed per second), with a light brightness of typically 36.36 candela/m² (10.6 footlamberts) (conventional light level) or 56.6 candela/m² (16.5 footlamberts) (high brightness level).

### DETAILED DESCRIPTION OF THE INVENTION

The invention described herein is a method for combining two levels of visual impact simultaneously in a motion picture presentation. Certain image components are photographed at twenty-four or twenty-five frames per second and impart to the viewers of the film the sort of experience typically associated with the "cinematic" look of conventional motion picture exhibition; including such artifacts as strobing, motion blur and interpolation of motion that does not quite appear smooth. For the purpose of this invention, these cinematic artifacts are desirable for cinematic artistry and essential to keep from overwhelming the viewers. By contrast, other image components are photographed at forty-eight or fifty frames per second. Because of the lifelike appearance of motion and lack of artifacts associated with twenty-four or twenty-five frame per second presentation, these image components appear palpably more realistic when viewed; they lack the "cinematic" appearance of twenty-four or twenty-five frame per second projection and appear far more realistic than the image components photographed at twenty-four or twenty-five frames per second. These two sequences produced at different frame rates are composited togetner onto a single strip of film to produce an image that appears highly realistic in part and "cinematic" in the other.

The options of twenty-four or twenty-five frames per second for the lower frame rate used and forty-eight or fifty frames per second for the higher frame rate used allows the invention described to be used on a worldwide basis. With the expectation that AC synchronous motors will (or, at least, can) be used to power such equipment as projectors and optical printers, the use of the twenty-four frames per second speed is compatible with cinema presentation in the United States and other countries where 60 Hz. AC power is used. The use of twenty-four and forty-eight frames per second in this invention also comports with the use of twenty-four frames per second as a frame rate for conventional cinema operations and film presentation. In countries where 50 Hz. AC power is used, the use of twenty-five frames per second as the lower frame rate and fifty frames per second as the higher frame rate renders this invention compatible with the variety of AC power in common use.

While the preferred embodiment of this invention envisions twenty-four or twenty-five frames per second as the lower frame rate and forty-eight or fifty frames per second as the higher frame rate, other combinations of frame rates are possible. Sixteen and thirty-two, eighteen and thirty-six or twenty-six and fifty-two frames per second are feasible frame rate combinations for the invention described. The only requirement is that the lower frame rate be thirty frames per second or less, and the higher frame rate be more than thirty frames per second. This is because the artifacts thatdeliver the "cinematic" look at such frame rates as twenty-four or twenty-five frames per second begin to disappear at thirty frames per second and disappear completely as the frame rate rises to more than thirty frames per second. The combination of thirty and sixty frames per second can be used in the practice of this invention, although the results will not be as perceptible as when the lower frame rate is twenty-four or twenty-five frames per second. In the preferred embodiment of the invention, therefore, the lower frame rate should be twenty-four or twenty-five frames per second and the higher frame rate should be forty-eight or fifty frames per second. To allow for the compositing of image components according to the invention, the higher frame rate should be double the lower frame rate.

The drawings provide an example of the practice of the preferred embodiment of the invention. There were sequences in the American film Jurassic Park where people (photographed running as live action) appeared to be chased by dinosaurs, which were computer-animated creations. In the actual post-production of Jurassic Park, the live-action images of the people running were composited with the computer-animated images of the dinosaurs, both at twenty-four frames per second. For the present invention, let us assume that similar live-action images of a man running, photographed at twenty-four or twenty-five frames per second (Fig. 1), are composited with computer-animated dinosaurs (Fig. 2), although the dinosaur images are produced so that forty-eight or fifty of them are presented to the audience each second (along with twenty-four or twenty-five images of the man running as the components of the scene). Fig. 3 shows the composited images resulting from the mixing of the image components of Figs. 1 and 2. The images depicted in Fig. 3 will be projected to the audience at forty-eight or fifty frames per second, with each image component from Fig. 1 presented twice. What the viewers perceive is that the man in Fig. 1 appears "cinematic" and confined to the apparent plane of the screen, while the dinosaurs depicted in Fig. 2 will appear much more real. Their motion will appear much smoother than that of the man, and the dinosaurs will seem to be free from the confinement of the apparent plane of the screen. Thus, the dinosaurs will appear able to "pop out" from the confines of the screen and jump toward the audience.

In converting from twenty-four or twenty-five to forry-eight or fifty frames per second, each image on Fig. 1 is printed twice, so image component 11 appears at composited images 31 and 31'; image component 12 is printed at composited images 32 and 32' and image component 13 is printed at composited images 33 and 33'. Adding the image components from Fig. 2, image components 21 and 21' are mixed successively with image component-II to form composited images 31 and 31'. Similarly, image components 22 and 22' are mixed with image component 12 to form images 32 and 32' and image components 23 and 23' are mixed with image component 13 to form composited images 33 and 33'. This compositing treatment continues throughout the entire scene, as long as the filmmaker wishes to combine onto a single image both components that have the "cinematic" look of twenty-four or twenty-five frame per second presentation and the "high-impact" look of forty-eight or fifty frame per second presentation.

In the preferred embodiment of the invention, projection of films should be accomplished by a projector featuring high-speed pulldown and highly accurate registration. Conventional Geneva projectors are suitable, if modified to advance the film twice as often as in conventional operation. This can be done through methods known in the art. The projector motor can be modified to turn at double the conventional speed, thereby driving all operations twice as often. Alternatively, a double cam pin (rather than the conventional single cam pin) can be used to move the star wheel twice as often as in conventional projection, thereby advancing the film twice as often. Alternatively, a more advanced approach, such as that used in the "Linear Loop" projector manufactured by the Pioneer Technology Corp. of Burbank,California, U.S.A., can be used. Optimally, film pulldown should be accomplished in three or four miliseconds to allow sufficient light to pass through the film to give the desired audience impact. A double bladed shutter is also essential.

In the invention described here, the need for a special light source required in Trumbull 160 is eliminated, due to advances in commercial single-lamp light sources. The light efficiency of contemporary projectors, with up to 7000 watts available, allows sufficient light to produce the effects desired for the practice of this invention. The effects noted in Trumbull 160 are obtained with the present invention at forty-eight or fifty frames per second.

Moreover, the psychological effects Trumbull claimed to achieve are available with the invention described here without resort to a frame rate of sixty frames per second. The presentation of forty-eight or fifty images to the viewer each second leads to a comparable level of smoothness of motion to that available at sixty frames per second. However, at recommended light levels (54.9 candela/m² (sixteen footlamberts) or more), flicker remains perceptible. Use of the double bladed shutter at forty-eight or fifty frames per second, however, eliminates flicker by presenting ninety-six or one hundred impressions per second to the viewers. Thus, the beneficial effects of the Trumbull system are obtained without the need for equipment that is limited in its application to special venues.

It is also feasible to modify the method described here to highlight the difference between the "high-impact" and "cinematic" images in separate scenes in a film. Weisgerber 286 taught the use of brighter light for "high-impact" scenes than for scenes that are designed to retain the "cinematic" look. In such instances, where it is desired that an entire scene be more visually impressive than other entire scenes, light level can be varied according to Weisgerber's previous invention. Similarly, Weisgerber also teaches the selective underexposure of certain film frames as printed to create the artifact of flicker when it is desired that the viewers of the film perceive flicker during the speed change. In the above-described invention, the portions of images which the filmmaker wishes to present the "cinematic" look can be selectively underexposed to appear less bright than the high-impact components of the image, while the high-impact images will appear brighter and more realistic by comparison; an effect that also works for composited scenes.

In the preferred embodiment of the invention, the film format used is 70mm film (65mm negative) with five perforations per frame. With high-speed pulldown increasing the light that reaches the screen and pin-registration increasing the perceived resolution of the images projected onto the screen, it is possible to approach (or even exceed) the SMPTE standard of resolution of sixty line pairs per milimeter. In any event, the resolution available with the method described can also accommodate any other standard or nonstandard film format or guage. The resolution available with 35mm film stock will be less than with 70mm film, but it will still be significantly higher than conventionally available with standard 35mm release prints, due to the use of pin-registered projection.

The increased amount of light reaching the screen due to high-speed pulldown projection, along with the increased resolution delivered by the pin-registered projection mechanism, allows a greater amount of magnification to be accomplished than was previously feasible. It is, therefore, possible to install larger screens in conventional motion picture theaters than had heretofore been possible. The invention described here facilitates a situation where all (or nearly all) of the audience members view a motion picture screen so large that the image will cover the entire "front" wall of the auditorium, from wall to wall and from floor to ceiling. Larger screens that can be used in accordance with this invention (as opposed to smaller screens necessitated by conventional methods and technology) can be masked through use of the methods taught by Vetter (U.S. Pat. No. 3,475,086 (1969))(upper and side masks) and previously by Weisberber (U.S. Pat. No. 5,121,086 (1992))(lower screen mask). With the use of these methods, the beneficial effects delivered by the invention described here are available with any standard or nonstandard film format, quickly and automatically.

The invention described here now allows the filmmaker to modulate the amount of impact that a component of an image will have upon the viewers of the film being presented; not only between scenes, but with simultaneous action within a single film sequence. While the method described here permits the compositing of high-impact" and "cinematic" images together, it is not necessary that such compositing always be done. The "high-impact" mode may be reserved for visually impressive scenes, where it is used to best advantage. For scenes where an impressive visual experience is unnecessary or could even be undesirable (such as a scene where the dialogue between two characters advances the story line of the film and a conventional "cinematic" presentation keeps the viewers of the film from being visually overloaded), the "cinematic" look can be retained.

Using different film technologies to produce different levels of impact on the viewers is not new. As far back as the mid-1920s, color scenes were used selectively for the ballroom scene in The Phantom of the Opera (1925) and the Resurrection scene in King of Kings (1927). The Wizard of Oz (1939) depicted events occurring in Kansas in black and white (with sepia tint) and the events occurring in the mythical land of Oz in full color; an effect achieved through scenic and costume design, not be compositing two images. Until now, there was no method available for compositing high-impact image components with other image components that retain the "conventional" look of the standard technology. The present invention also demonstrates the first use of different frame rates which are combined to advance a motion picture story line in real-time mode. In the present invention, the action does not appear to speed up or slow down, as conventional slow-motion and fast-motion photography deliver. Instead, the different frame rates combine to deliver either a greater or lesser illusion of reality to the viewers of the film. In addition, high-impact image components can be joined with lower-impact image components to create a "dimensional" effect upon the viewers of the picture, thus adding another variable that can be modulated under the creative control of the filmmaker.

This creative control can be used in many different ways. Live action photographed at twenty-four or twenty-five frames per second can be composited with other live action photographed at forty-eight or fifty frames per second, so that people who will appear "cinematic" to the viewers will be watching other people involved in action that will look highly realistic and dimensional. Live action can also be composited with animation. Live action photographed at twenty-four or twenty-five frames per second will give the impression that real people have been dropped into a cartoon setting. This live action can be composited with animation printed for projection at forty-eight or fifty frames per second. Any style of animation can be used, from cartoon drawings to sophisticated computer-generated images. Animation at twenty-four or twenty-five images per second can also be combined with animation at forty-eight or fifty images per second. In any application, the image components photographed or printed at forty-eight or fifty images per second deliver a dimensional effect not noticed at twenty-four or twenty-five images per second, since viewers perceive the screen itself as an artifact of projection at twenty-four or twenty-five frames per second. The images projected at forty-eight or fifty frames per second will appear to escape the boundaries of the apparent plane of the screen.

The metod described is feasible for installation in any conventional motion picture theater, as opposed to such high-impact systems as IMAX and SHOWSCAN, whose lack of adaptability to the theatrical exhibition marketplace limits their use to a few special venues and make them unsuitable for full-length feature films.

Conventional equipment is used in the invention desscribed, except that the preferred projector should be a high-speed pulldown, pin-registered type equipped to show films at forty-eight or fifty frames per second, through a double-bladed shutter. This configuration delivers ninety-six or one hundred impressions per second to the viewers; two impressions of each image photographed or printed at forty-eight or fifty frames per second and four impressions of each image photographed or printed at twenty-four or twenty-five frames per second. In practice, the showing of forty-eight or fifty frame-per-second images twice will produce the high-impact effects described in Trumbull 160; while the showing of the twenty-four or twenty-five frame-per-second images flashed four times (each image duplicated and then flashed twice) will retain the "cinematic" look associated with projection at twenty-four or twenty-five frames per second.

The method described also provides other advantages not available with other high-impact systems, in addition to the ability to selectively blend high-impact and conventional "cinematic" images. If a filmmaker does not wish to mix high and lesser-impact images within a single film frame, it is still possible to intercut high and lesser-impact scenes within a single motion picture, without the necessity of specially treating certain frames of film to accomplish a transition between two different frame rates. Moreover, the method described allows easy conversion from the rate of forty-eight or fifty frames per second to the conventional rate of twenty-four or twenty-five frames per second for general release. Images photographed at forty-eight or fifty frames per second will be transferred by printing alternate frames to make prints for exhibition at a twenty-four or twenty-five frames per second. The advantages of the dimensional high-impact scenes and images will be lost, but general release prints can be made without the difficulties encountered in converting (for example) from sixty to twenty-four frames per second as described in Trumbull 423.

The method described is available for use with any film format, and transfer of images can be accomplished through an optical printer or by use of computerized image transfer processes known in the art. To enhance audience impact, the improved resolution available permits greater magnification and, therefore, a larger screen to be fitted to the architecture of the auditorium than had heretofore been feasible.

Any film format may be used in accordance with this invention, but 70mm film will deliver greater resolution than 35mm. In any event, the use of the invention described will greatly improve the visual dynamics of the dimensionality of the film upon the viewers of motion pictures, over that available with conventional 35mm release prints (with easy conversion to that format, when desired).

No change is made in the physical film stock; only the frame rates are varied and selected to produce the desired effect. Audio and other nonpicture information can be recorded onto the film to be shown in the usual ways known in the cinema art. Due to the high-impact nature of some of the images to be presented, however, it is expected that the sound system used will also present an appropriate degree of auditory impact.

This invention expands the creative latitude available to the filmmaker. It is now possible to modulate audience perception of reality in an easy and relatively inexpensive manner, and to an extent not possible until now. The examples described for applications of this method should be viewed as illustrative, and not limiting.

## Claims

1. A method of producing motion picture films for theatrical audiences, such method comprising the step of imparting onto such films first image components (11, 12, 13) recorded at a lower frame rate which is half the frame rate at which such films are projected to such audiences **characterised by** further comprising the step of imparting onto such films of second image components (21, 21', 22, 22', 23, 23') recorded at a higher frame rate which is the frame rate at which such films are projected to such audiences; each image component (11, 12, 13) of the first image components is printed twice so as to be superimposed onto two successive image components (21, 21'; 22, 22'; 23, 23') of the second image components.

2. A method as claimed in claim 1, **characterized in that** the lower frame rate is a frame rate of thirty frames per second or less.

3. A method as claimed in claim 1 or 2, **characterized in that** the first image components (11, 12, 13) are recorded onto a first strip of motion picture film at the said lower frame rate and are combined with the second image components (21, 21'; 22, 22'; 23, 23') recorded onto a second strip of motion picture film at the higher frame rate to produce a resultant series of cinematic images on a third strip of motion picture film, with the resultant series of images imparted onto said third film strip to be shown to the members of said audiences.

4. A method as claimed in claim 3, **characterized in that** said third strip of motion picture film further contains audio and other nonpicture information.

5. A method as claimed in claim 3 or 4, **characterized in that** the superimposition is accomplished by means of optical printing or computerized image transfer.

6. A method as claimed in any one of claims 3 to 5, **characterized in that** the first image components (11, 12, 13) recorded onto said first strip of motion picture film are each transferred twice, onto two successive frames of said third strip of motion picture film, composited with each successive image component (21, 21'; 22, 22'; 23, 23') transferred from said second strip of motion picture film; whereby said third strip of motion picture film contains a composite image made up of said image components (11, 21, 21'; 12, 22, 22'; 13, 23, 23') of the first and second strips of motion picture film.

7. A method as claimed in any one of claims 3 to 6, **characterized in that** the image components (11, 12, 13) recorded onto said first strip of motion picture film are recorded at the rate of twenty-four frames per second, and the image components (21, 21'; 22, 22'; 23, 23') recorded onto said second strip of motion picture film and the image components transferred to said third strip of motion picture film are so recorded and transferred at the rate of forty-eight frames per second.

8. A method as claimed in any one of claims 3 to 6, **characterized in that** the image components (11, 12, 13) recorded onto said first strip of motion picture film are recorded at the rate of twenty-five frames per second, and the image components (21, 21'; 22, 22'; 23, 23') recorded onto said second strip of motion picture film and the image components transferred to said third strip of motion picture film are so recorded and transferred at the rate of fifty frames per second.

9. A method as claimed in any one of the preceding claims, **characterized in that** said image components (11, 12, 13; 21, 21'; 22, 22'; 23, 23') are recorded by means of photographing live action, cartoon animation or computerized animation.

10. A motion picture film produced by a method in accordance with any one of the preceding claims, **characterized in that** the film comprises a sequence of frames (31, 31'; 32, 32'; 33, 33') having first and second superimposed image components, successive pairs of frames comprising identical first image components (11, 12, 13) and different second image components (21, 21'; 22, 22'; 23, 23').

11. A motion picture film as claimed in claim 10, **characterized in that** the said sequence of frames is intercut with other sequences of frames which each comprise a single image component, each of which is duplicated over two successive frames.

12. A method of exhibiting a motion picture film in accordance with claim 10 or 11, or produced by a method in accordance with any one of claims 1 to 9, **characterized in that** the film is exhibited at the higher of the different frame rates.

13. A method as claimed in claim 12 when appendant to claim 7 or 8, **characterized in that** the film is exhibited at a frame rate of forty-eight or fifty frames per second, respectively.

14. A method as claimed in claim 12 or 13, **characterized in that** the film is exhibited through a projector equipped with a double-bladed shutter resulting in the delivery of two flashes of light per frame.

15. A method as claimed in any one of claims 12 to 14, for exhibiting a film in accordance with claim 11, **characterized in that** the projector delivers a light level of 56.6 candela/m² (16.5 footlamberts) or more when the said sequence of frames is being projected, and **in that** the projector delivers a light level of 36.36 candela/m² (10.6 footlamberts) or less when the said other sequences of frames are being projected.

## Patentansprüche

1. Verfahren zur Erzeugung von Bewegtbildfilmen für Theaterpublikum, wobei das Verfahren den Schritt aufweist: Zuteilen auf solchen Filmen erste Bildkomponenten (11, 12, 13), die mit einer niedrigeren Rahmenrate, welche halb die Rahmenrate ist, mit der solche Filme für solches Publikum projiziert werden, aufgezeichnet werden,
**gekennzeichnet durch** die Schritte: Zuteilen auf solchen Filmen zweite Bildkomponenten (21, 21', 22, 22', 23, 23'), die mit einer höheren Rahmenrate, welche die Rahmenrate ist, mit der solche Filme solchem Publikum projiziert werden, aufgezeichnet werden, wobei jede Bildkomponente (11, 12, 13) der ersten Bildkomponenten zweimal gedruckt wird, um zwei sukzessiven Bildkomponenten (21, 21'; 22, 22'; 23, 23') der zweiten Bildkomponenten überlagert zu werden.

2. Verfahren nach Anspruch 1, **dadurch gekennzeichnet, dass** die niedrigere Rahmenrate eine Rahmenrate von 30 Rahmen pro Sekunde oder weniger ist.

3. Verfahren nach Anspruch 1 oder 2, **dadurch gekennzeichnet, dass** die ersten Bildkomponenten (11, 12, 13) auf einen ersten Bewegtbildfilmstreifen mit der niedrigeren Rahmenrate aufgezeichnet werden und mit den auf einen zweiten Bewegtbildfilmstreifen mit der höheren Rahmenrate aufgezeichneten zweiten Bildkomponenten (21, 21'; 22, 22'; 23, 23') kombiniert werden, um eine resultierende Serie kinematischer Bilder auf einem dritten Bewegtbildfilmstreifen zu erzeugen, wobei die resultierende Serie von auf dem dritten Filmstreifen zugeteilten Bildern Mitgliedern des Publikums zu zeigen ist.

4. Verfahren nach Anspruch 3, **dadurch gekennzeichnet, dass** der dritte Bewegtbildfilmstreifen außerdem Audio- oder andere Nichtbild-Information enthält.

5. Verfahren nach Anspruch 3 oder 4, **dadurch gekennzeichnet, dass** die Überlagerung mittels optischen Drucks oder rechnergestützter Bildübertragung ausgeführt wird.

6. Verfahren nach einem der Ansprüche 3 bis 5, **dadurch gekennzeichnet, dass** die auf dem ersten Bewegtbildfilmstreifen aufgezeichneten ersten Bildkomponenten (11, 12, 13) jeweils zweimal auf zwei sukzessive Rahmen des dritten Bewegtbildfilmstreifens, zusammengesetzt mit jeder vom zweiten Bewegtbildfilmstreifen übertragenen sukzessiven Bildkomponente (21, 21'; 22, 22'; 23, 23'), übertragen werden, wodurch der dritte Bewegtbildfilmstreifen ein aus den Bildkomponenten (11, 21, 21'; 12, 22, 22'; 13, 23, 23') des ersten und zweiten Bewegtbildfilmstreifens gebildetes zusammengesetztes Bild enthält.

7. Verfahren nach einem der Ansprüche 3 bis 6, **dadurch gekennzeichnet, dass** die auf dem ersten Bewegtbildfilmstreifen aufgezeichneten Bildkomponenten (11, 12, 13) mit einer Rate von vierundzwanzig Rahmen pro Sekunde aufgezeichnet werden und die auf dem zweiten Bewegtbildfilmstreifen aufgezeichneten Bildkomponenten (21, 21'; 22, 22'; 23, 23') und die zum dritten Bewegtbildfilmstreifen übertragenen Bildkomponenten so mit der Rate von achtundvierzig Rahmen pro Sekunde aufgezeichnet und übertragen werden.

8. Verfahren nach einem der Ansprüche 3 bis 6, **dadurch gekennzeichnet, dass** die auf dem ersten Bewegtbildfilmstreifen aufgezeichneten Bildkomponenten (11, 12, 13) mit der Rate von fünfundzwanzig Rahmen pro Sekunde aufgezeichnet werden und die auf dem zweiten Bewegtbildfilmstreifen aufgezeichneten Bildkomponenten (21, 21'; 22, 22'; 23, 23') und die zum dritten Bewegtbildfilmstreifen übertragenen Bildkomponenten so mit der Rate von fünfzig Rahmen pro Sekunde aufgezeichnet und übertragen werden.

9. Verfahren nach einem der vorhergehenden Ansprüche, **dadurch gekennzeichnet, dass** die Bildkomponenten (11, 12, 13; 21, 21'; 22, 22'; 23, 23') mittels fotografierender Live-Aktion, Cartoon-Animation oder rechnergestützter Animation aufgezeichnet werden.

10. Bewegtbildfilm, erzeugt durch ein Verfahren nach einem der vorhergehenden Ansprüche, **dadurch gekennzeichnet, dass** der Film eine Rahmensequenz (31, 31'; 32, 32'; 33, 33') mit ersten und zweiten überlagerten Bildkomponenten aufweist, wobei sukzessive Rahmenpaare identische erste Bildkomponenten (11, 12, 13) und unterschiedliche zweite Bildkomponenten (21, 21'; 22, 22'; 23, 23') aufweisen.

11. Bewegtbildfilm nach Anspruch 10, **dadurch gekennzeichnet, dass** die Rahmensequenz mit anderen Rahmensequenzen, die jeweils eine einzelne Bildkomponente aufweisen, deren jede über zwei sukzessive Rahmen dupliziert ist, zwischengeschnitten ist.

12. Verfahren zum Zeigen eines Bewegtbildfilms nach Anspruch 10 oder 11 oder erzeugt durch ein Verfahren nach einem der Ansprüche 1 bis 9, **dadurch gekennzeichnet, dass** der Film mit der höheren der unterschiedlichen Rahmenraten gezeigt wird.

13. Verfahren nach Anspruch 12, wenn verbunden mit Anspruch 7 oder 8, **dadurch gekennzeichnet, dass** der Film mit einer Rahmenrate von achtundvierzig bzw. fünfzig Rahmen pro Sekunde gezeigt wird.

14. Verfahren nach Anspruch 12 oder 13, **dadurch gekennzeichnet, dass** der Film durch einen mit einem in der Abgabe zweier Lichtblitze pro Rahmen resultierenden Doppel-Lamellenverschluss ausgerüsteten Projektor gezeigt wird.

15. Verfahren nach einem der Ansprüche 12 bis 14 zum Zeigen eines Films nach Anspruch 11, **dadurch gekennzeichnet, dass** der Projektor einen Lichtpegel von 56,6 Candela/m² (16,5 Foot-Lambert) oder mehr abgibt, wenn die Rahmensequenz projiziert wird, und dass der Projektor einen Lichtpegel von 36,36 Candela/m² (10,6 Foot-Lambert) oder weniger abgibt, wenn die anderen Rahmensequenzen projiziert werden.

## Revendications

1. Méthode de production de films cinématographiques pour les audiences de théâtre, cette méthode comprenant l'étape de transfert sur ces films des composants de la première image (11, 12, 13) enregistrés à une vitesse de défilement des images plus basse qui représente la moitié de la vitesse de défilement des images à laquelle ces films sont projetés à ces audiences, **caractérisée en ce qu'**elle comprend de plus l'étape de transfert sur ces films des composants de seconde image (21, 21', 22, 22', 23, 23') enregistrés à une vitesse de déroulement des images plus élevée qui est la vitesse de déroulement des images à laquelle ces films sont projetés pendant ces audiences, chaque composant d'image (11, 12, 13) des composants de première image étant imprimé deux fois de façon à être superposé sur deux composants d'image successifs (21, 21', 22, 22', 23, 23') des composants de seconde image.

2. Méthode selon la revendication 1, **caractérisée en ce que** la vitesse de déroulement des images la plus basse est une vitesse de déroulement des images de trente images par seconde ou moins.

3. Méthode selon la revendication 1 ou 2, **caractérisée en ce que** les composants de la première image (11, 12, 13) sont enregistrés sur une première bande de pellicule de film à ladite plus basse vitesse de déroulement des images et sont combinées avec les composants de seconde image (21, 21', 22, 22', 23, 23') enregistrés sur une seconde bande de pellicule de film à la vitesse de déroulement des images la plus élevée afin de produire une série résultante d'images cinématiques sur une troisième bande de pellicule de film, avec la série résultante d'images transférée sur ladite troisième bande de pellicule pour être montrée aux membres desdites audiences.

4. Méthode selon la revendication 3, **caractérisée en ce que** ladite troisième bande de pellicule de film contient de plus des informations audio et d'autres informations non visuelles.

5. Méthode selon la revendication 3 ou 4, **caractérisée en ce que** la superposition est accomplie par un moyen d'impression optique ou de transfert d'image par ordinateur.

6. Méthode selon l'une quelconque des revendications 3 à 5, **caractérisée en ce que** les composants de première image (11, 12, 13) enregistrés sur la première bande de pellicule de film sont chacun transférés deux fois, sur deux images successives de ladite troisième bande de pellicule de film, composée avec chaque composant d'image successive (21, 21', 22, 22', 23, 23') transféré depuis ladite deuxième bande de pellicule, en quoi ladite troisième bande de pellicule contient une image composite faite desdits composants d'image (11, 21, 21', 12, 22, 22', 13, 23, 23') des premières et deuxièmes bandes de pellicule de film.

7. Méthode selon l'une quelconque des revendications 3 à 6, **caractérisée en ce que** les composants d'image (11, 12, 13) enregistrés sur ladite première bande de pellicule sont enregistrés à la vitesse de vingt-quatre images par seconde, et les composants d'image (21, 21', 22, 22', 23, 23') enregistrés sur ladite deuxième bande de pellicule et les composants d'image transféré à ladite troisième bande de pellicule sont ainsi enregistrés et transférés à la vitesse de quarante-huit images pas seconde.

8. Méthode selon l'une quelconque des revendications 3 à 6, **caractérisée en ce que** les composants d'image (11, 12, 13) enregistrés sur ladite première bande de pellicule sont enregistrés à la vitesse de vingt-cinq images par seconde, et les composants d'image (21, 21', 22, 22', 23, 23') enregistrés sur ladite deuxième bande de pellicule et les composants d'image transférés sur ladite troisième bande de pellicule sont donc enregistrés et transférés à la vitesse de cinquante images par seconde.

9. Méthode selon l'une quelconque des revendications précédentes, **caractérisée en ce que** lesdits composants d'image (11, 12, 13, 21, 21', 22, 22', 23, 23') sont enregistrés au moyen de la photographie d'action en direct, de l'animation de dessins animés ou de l'animation par ordinateur.

10. Film produit selon une méthode en accord avec l'une quelconque des revendications précédentes, **caractérisé en ce que** le film comprend une séquence d'images (31, 31', 32, 32', 33, 33') ayant des premier et second composants d'image superposés, des paires successives d'images comprenant des composants de première image identiques (11, 12, 13) et des composants de deuxième image différents (21, 21', 22, 22', 23, 23').

11. Film selon la revendication 10, **caractérisé en ce que** ladite séquence d'images est entrecoupée par d'autres séquences d'images qui comprennent chacune un composant d'image unique, chacun des composants étant dupliqué sur deux images successives.

12. Méthode de projection d'un film selon la revendication 10 ou 11, ou produit par une méthode selon l'une quelconque des revendication 1 à 9, **caractérisée en ce que** le film est projeté à la plus élevée des différentes vitesses.

13. Méthode selon la revendication 12 quand elle dépend de la revendication 7 ou 8, **caractérisée en ce que** le film est montré à une vitesse de déroulement des images de quarante-huit ou cinquante images par seconde, respectivement.

14. Méthode selon la revendication 12 ou 13, **caractérisée en ce que** le film est projeté à l'aide d'un projecteur équipé d'un obturateur à double lame résultant en la délivrance de deux flash de lumière par image.

15. Méthode selon l'une quelconque des revendications 12 à 14, pour montrer un film en accord avec la revendication 11, **caractérisée en ce que** le projecteur délivre un degré de lumière de 56,6 candela/m² (16,5 footlamberts) ou plus quand ladite séquence d'images est en cours de projection, et **en ce que** le projecteur délivre un degré de lumière de 36,36 candela/m² (10,6 footlamberts) ou moins quand lesdites autres séquences d'images sont en cours de projection.
